# FASCICULE DE BREVET EUROPEEN

(11) **EP 1 560 031 B1**
(45) Date de publication et mention de la délivrance du brevet: **30.08.2006**
(21) Numéro de dépôt: 04293096.6
(22) Date de dépôt: 22.12.2004
(51) Int. Cl.: G01R 31/3185, G01R 31/317

(54) **Sécurisation du mode de test d'un circuit intégré**
Absicherung des Testmodus einer integrierten Schaltung
Integrated circuit test mode securisation

(30) Priorité: 29.01.2004 FR 0400836
(43) Date de publication de la demande: 03.08.2005
(73) Titulaire: STMicroelectronics S.A., 92120 Montrouge (FR)
(72) Inventeur: Bancel, Frédéric, 13113 Lamanon (FR); Hely, David, 13170 Les Pennes Mirabeau (FR)
(74) Mandataire: Bentz, Jean-Paul

(56) Documents cités:
- EP-A- 1 089 083
- US-A- 5 357 572
- PATENT ABSTRACTS OF JAPAN vol. 2003, no. 04, 2 avril 2003 (2003-04-02) -& JP 2002 365337 A (SONY CORP), 18 décembre 2002 (2002-12-18)
- JARAMILLO K ET AL: "10 TIPS FOR SUCCESSFUL SCAN DESIGN: PART ONE" EDN ELECTRICAL DESIGN NEWS, CAHNERS PUBLISHING CO. NEWTON, MASSACHUSETTS, US, vol. 45, no. 4, 17 février 2000 (2000-02-17), pages 67-73,75, XP000966353 ISSN: 0012-7515
- HELY D ET AL: "Scan design and secure chip" ON-LINE TESTING SYMPOSIUM, 2004. IOLTS 2004. PROCEEDINGS. 10TH IEEE INTERNATIONAL FUNCHAL, MADEIRA ISLAND, PORTUGAL 12-14 JULY 2004, PISCATAWAY, NJ, USA,IEEE, 12 juillet 2004 (2004-07-12), pages 219-224, XP010714290 ISBN: 0-7695-2180-0

## Description

L'invention concerne, de façon générale, les circuits électroniques intégrés synchrones munis de moyens de logique combinatoire, de bascules, et de moyens de test.

Plus précisément, l'invention concerne un circuit électronique comprenant : une pluralité de cellules logiques; une pluralité de cellules configurables comprenant chacune au moins un multiplexeur et une bascule; et une pluralité de conducteurs de commande reliés aux cellules configurables et sur lesquels circulent sélectivement des signaux de commande émis en fonctionnement par un circuit de commande tel qu'un contrôleur d'accès, les cellules configurables adoptant sélectivement, en fonction des signaux de commande, un mode de fonctionnement standard dans lequel elles sont fonctionnellement reliées à certaines au moins des cellules logiques avec lesquelles elles coopèrent pour former un circuit logique, et un mode de test dans lequel ces cellules configurables sont fonctionnellement connectées en chaîne pour former un registre à décalage doté d'une entrée et d'une sortie de données.

Il est aujourd'hui bien connu de tester le fonctionnement correct des éléments fonctionnels d'un circuit intégré en imposant et / ou en déterminant, à des instants prédéfinis, des valeurs de données présentes en certains points internes de ce circuit intégré.

Une telle technique de test de chemins internes d'un circuit intégré (désignée par "scanpath" ou "internal scan method" en langue anglaise) est par exemple décrite dans la publication de M. Williams et J. Angel, intitulée "Enhancing Testability of LSI Circuits Via Test Points and Additional Logic, IEEE Transactions on Computers, vol. C-22, no.1; Janvier 1973".

Selon cette technique, chacune des bascules du circuit logique, dont il est utile de connaître l'état et / ou d'imposer le contenu durant le fonctionnement standard du circuit intégré, est dotée à son entrée d'un multiplexeur.

Les différentes bascules et les multiplexeurs qui leur sont associés constituent ainsi autant de cellules configurables dont les accès sont individuellement contrôlés par ces multiplexeurs.

Les multiplexeurs de ces différentes cellules configurables sont collectivement commandés par un contrôleur d'accès ou "contrôleur TAP" ("TAP" pour "Test Access Port" en langue anglaise) qui, en fonction d'un mode de fonctionnement choisi, utilise cet ensemble de cellules configurables soit comme un circuit fonctionnel standard, intégré au circuit logique qu'il forme avec les cellules logiques, soit comme un circuit de test.

Pour ce faire, le contrôleur TAP adresse sur différents conducteurs de commande, par lesquels il est relié aux différentes cellules configurables, des signaux de commande, tels qu'un signal de commande de mode, un signal de commande de chaînage ou encore un signal de commande de propagation de données, qui modifient les chemins de circulation des données au sein du circuit intégré et qui permettent ainsi la capture de ces données par le contrôleur, en vue de leur analyse.

En mode de fonctionnement standard, le contrôleur TAP pilote donc les multiplexeurs des cellules configurables de manière que les bascules de ces cellules soient connectées à des cellules logiques environnantes pour définir un ou plusieurs sous-ensembles fonctionnels du circuit intégré.

Dans le mode de test, qui est normalement déclenché à réception par le contrôleur TAP d'une commande d'exécution de test, ce contrôleur produit un signal de commande de chaînage pour connecter en série les bascules des cellules configurables de manière à former un registre à décalage.

Ce registre comporte notamment une entrée série et une sortie série respectivement connectées à une sortie et à une entrée du contrôleur TAP, ainsi qu'une entrée d'horloge recevant un signal d'horloge pour cadencer le flot de données.

Dans un premier temps, le contrôleur TAP charge en série des données dans les bascules des cellules configurables par l'entrée du registre à décalage que forment ces cellules.

Puis, le contrôleur TAP change la commutation des multiplexeurs pour former le circuit fonctionnel, et commande l'exécution d'un ou plusieurs cycles d'horloge par ce circuit fonctionnel. Les données chargées dans les bascules des cellules configurables sont alors traitées par le circuit fonctionnel.

Le contrôleur change alors une nouvelle fois la commutation des multiplexeurs pour former à nouveau le registre à décalage et récupère, en série sur la sortie du registre à décalage, les données mémorisées dans les bascules des cellules configurables durant le dernier cycle d'horloge.

En dépit de l'intérêt confirmé de cette technique de test, son application pratique peut en certaines circonstances s'avérer problématique, notamment sur les circuits intégrés qui traitent des données secrètes.

En effet, dans la mesure où l'activation du mode de test peut permettre à un fraudeur de lire le contenu des bascules des cellules configurables, cette technique de test présente a priori l'inconvénient de rendre de tels circuits très vulnérables à une utilisation frauduleuse.

Par exemple, en stoppant à divers moments un processus de chargement interne de données secrètes dans le circuit intégré et en déchargeant le contenu du registre à décalage, un fraudeur pourra obtenir des informations sur des données secrètes, voire les reconstituer.

En activant le mode de test, un fraudeur pourra également accéder en écriture aux bascules des cellules configurables pour insérer des données frauduleuses, ou bien pour placer le circuit intégré dans une configuration non autorisée. Il pourra ainsi par exemple accéder à un registre contrôlant un organe sécuritaire tel qu'un capteur pour le désactiver. Il pourra également injecter une donnée erronée en vue d'obtenir de l'information sur une donnée secrète.

EP 1 089 083 A1 divulgue un circuit électronique selon le préambule de la revendication 1 et comprenant un circuit de codage visant à prévenir les tentatives de fraude.

La fraude peut en fait adopter deux stratégies différentes, dont la première consiste à prendre le contrôle du contrôleur TAP et à observer sur les plots externes le contenu des cellules du registre à décalage, et dont la seconde consiste à prendre le contrôle des cellules configurables en les excitant par micro-sondage de manière à simuler le pilotage de ces cellules par les signaux de commande qu'émet le contrôleur TAP.

Une tentative de fraude conforme à la première stratégie peut être bloquée par une technique qui fait l'objet d'une demande de brevet déposée parallèlement par le Titulaire.

En revanche, le but de la présente invention est précisément de proposer un circuit électronique conçu pour faire échec à une tentative de fraude conforme à la seconde stratégie évoquée ci-dessus.

Il existe donc un besoin pour un circuit électronique qui résolve un ou plusieurs de ces inconvénients. A cette fin, le circuit électronique de l'invention, par ailleurs conforme à la définition générique qu'en donne le préambule ci-dessus, est essentiellement caractérisé en ce qu'il comprend:
- un circuit logique présentant une pluralité de cellules logiques ;
- des cellules de mémorisation susceptibles de former un registre à décalage, susceptibles d'être connectées aux cellules logiques, et présentant des bornes de réception de signaux de commande respectifs propres à inscrire des données dans les cellules et à lire des données inscrites dans les cellules;
- un module de contrôle de connexion présentant une entrée de réception d'une clé d'identification, le module connectant les cellules de mémorisation selon un ordre déterminé pour former un registre à décalage de test lorsque l'entrée de réception reçoit une clé d'identification valide et lorsque les cellules de mémorisation reçoivent un signal de commande de test en lecture ou écriture, et le module connectant les cellules de mémorisation pour former aléatoirement un circuit de diversion lorsque l'entrée ne reçoit pas une clé d'identification valide et lorsque les cellules de mémorisation reçoivent un signal de commande de test en lecture ou écriture.

Selon une variante, les cellules logiques et les cellules de mémorisation sont connectées pour former un circuit fonctionnel lorsque les cellules de mémorisation ne reçoivent pas de signal de commande de lecture ou d'écriture de test.

Selon une autre variante, chaque cellule de mémorisation comprend :
- un multiplexeur dont une première entrée présente une connexion de formation du circuit fonctionnel et dont une deuxième entrée est connectée au module de contrôle de façon à former sélectivement le registre à décalage de test ou le circuit de diversion;
- une bascule D dont l'entrée est connectée à la sortie du multiplexeur et dont la sortie présente une connexion de formation du circuit fonctionnel et une connexion au module de contrôle.

Selon encore une variante, le module de contrôle comprend :
- un générateur aléatoire d'adresses ;
- un circuit de sélection présentant :

- une première entrée de réception d'une adresse de test ;
- une deuxième entrée connectée au générateur aléatoire ;
- une sortie reproduisant l'état de la première entrée lorsque la clé d'identification est valable et reproduisant sinon l'état de la deuxième entrée;
- des multiplexeurs, chacun associé à une cellule de mémorisation et présentant:

- une entrée de formation du registre à décalage de test ;
- au moins une entrée de formation d'un circuit de diversion ;
- une sortie connectée à la deuxième entrée du multiplexeur de la cellule de mémorisation associée ;
- une entrée d'adressage connectée à la sortie du circuit de sélection.

Selon encore une autre variante, le générateur aléatoire d'adresses génère aléatoirement une adresse distincte pour chaque multiplexeur associé à une cellule de mémorisation.

Selon une variante, le module de contrôle comprend des portes XOR dont la sortie est connectée à une entrée de formation d'un circuit de diversion et dont les entrées sont connectées à des cellules mémoires ou des cellules logiques.

Selon encore une variante, des entrées de formation d'un circuit de diversion sont connectées à un niveau logique prédéfini.

Selon une autre variante, le circuit de diversion est un registre à décalage formé des cellules de mémorisation connectées suivant un ordre aléatoire.

Selon encore une autre variante, le module comprend une entrée et une sortie respectivement pour l'inscription et la lecture des données dans les cellules formant le registre à décalage de test.

On peut également prévoir que le circuit comprenne un circuit de commande, tel qu'un contrôleur d'accès, relié par des conducteurs de commande respectifs aux cellules de mémorisation et délivrant en fonctionnement lesdits signaux de commande sur les conducteurs de commande, et appliquant les données à inscrire sur l'entrée du module et lisant les données sur la sortie du module.

L'invention porte également sur une carte à puce comprenant un tel circuit électronique.

D'autres caractéristiques et avantages de l'invention ressortiront clairement de la description qui en est faite ci-après, à titre indicatif et nullement limitatif, en référence aux dessins annexés, dans lesquels :
- la figure 1 est une vue générale d'un circuit selon l'invention ;
- la figure 2 est une illustration schématique des connexions lorsqu'on forme un circuit fonctionnel;
- la figure 3 est une illustration schématique des connexions lorsqu'on forme un registre à décalage de test;
- la figure 4 est une illustration schématique des connexions lorsqu'on forme un circuit de diversion ;
- la figure 5 illustre une variante destinée à former un circuit de diversion.

Un module contrôle la connexion de cellules de mémorisation associées à un circuit logique et susceptibles de former un registre à décalage de test. L'invention propose de former aléatoirement un ou plusieurs circuits de diversion avec les cellules de mémorisation lorsqu'une commande de lecture ou d'écriture est appliquée à ces cellules de mémorisation sans qu'une clé d'identification n'ait été fournie au module de contrôle. Ainsi, si on essaye d'inscrire ou de lire frauduleusement des données par formation du registre à décalage de test, les données seront en fait inscrites ou lues dans un circuit de diversion. Ces données n'auront soit pas l'effet attendu sur le circuit logique, soit n'auront aucune signification lors de la lecture. Ainsi, la récupération frauduleuse d'une clé secrète stockée dans le circuit logique est beaucoup plus ardue.

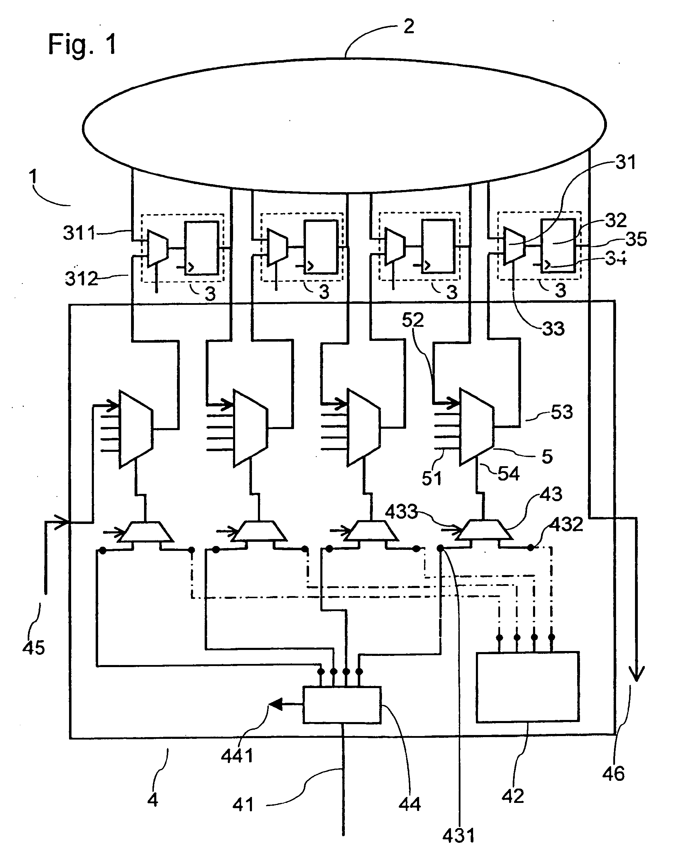

La figure 1 illustre un exemple de circuit électronique 1 selon l'invention. Le circuit 1 est un circuit intégré, comprenant un circuit logique 2 muni d'une pluralité de cellules logiques non illustrées. Le circuit 1 comprend également des cellules de mémorisation 3 connectées à ces cellules logiques et susceptibles de recevoir des signaux de commande pour inscrire ou lire des données dans les cellules. Le circuit 1 présente en outre un module de contrôle des connexions 4, auquel une entrée et la sortie de chaque cellule de mémorisation sont connectées. Le module de contrôle 4 présente une entrée 45 d'inscription de données de test et une sortie de lecture de données de test 46.

Les cellules de mémorisation 3 sont connues en soi. Une cellule de mémorisation comprend typiquement un multiplexeur 31, dont une première entrée 311 est connectée au circuit logique 2 et dont une deuxième entrée 312 est connectée au module de contrôle 4 de façon détaillée par la suite. Le plot de sélection 33 du multiplexeur permet de reproduire sélectivement sur la sortie du multiplexeur, soit l'état de la première entrée, soit l'état de la deuxième entrée. La sortie du multiplexeur 31 est connectée sur l'entrée d'une bascule D 32. Une sortie de la bascule D forme la sortie de la cellule de mémorisation et est connectée d'une part au circuit logique 2, et d'autre part au module de commande 4. La bascule D présente une entrée d'horloge 34 qui peut éventuellement être commandée en mode de test à une fréquence de test différente de la fréquence de fonctionnement normal du circuit 2.

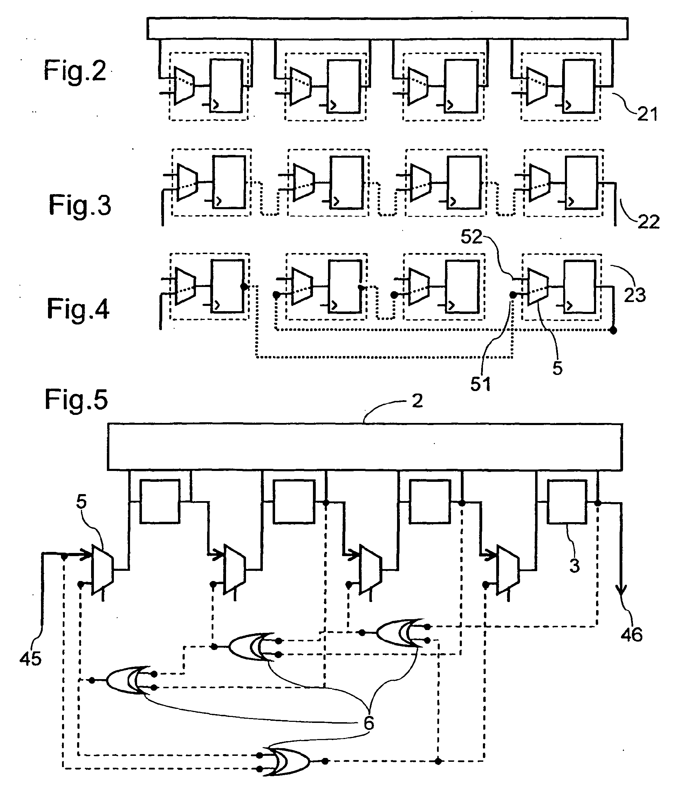

Selon l'état de la technique, le plot 33 reçoit typiquement un signal nommé scan_enabled fourni de façon connue en soi par un contrôleur TAP. Comme décrit dans l'introduction, on réalise un test de chemin interne du circuit logique 2 en appliquant initialement un signal scan_enabled sur le plot 33 des multiplexeurs. Les cellules de mémorisation forment alors un registre à décalage suivant la connexion illustrée schématiquement à la figure 3. On obtient ainsi un circuit de test 22. On charge alors ce registre à décalage avec les données appliquées à son entrée. On forme ensuite un circuit fonctionnel 21 comme illustré à la figure 2, en n'appliquant plus le signal scan_enabled sur le plot 33 de chaque multiplexeur. Le circuit fonctionnel 21 est amené à effectuer un ou plusieurs cycles d'horloges avec les données chargées. On forme ensuite à nouveau le circuit de test 22 et on lit alors en série les données inscrites dans le registre à décalage sur sa sortie.

L'invention vise notamment à protéger le circuit électronique contre une attaque par microsondage. Une telle attaque peut consister à appliquer une microsonde sur une commande des plots 33 pour former frauduleusement le registre à décalage de test et à appliquer une autre microsonde pour inscrire ou lire des données dans ce registre à décalage. Le module de connexion 4 ne forme le registre à décalage de test que lorsqu'il reçoit une clé d'identification correcte.

Le module de connexion 4 présente une entrée de réception 41 d'une clé d'identification. Cette clé d'identification peut se présenter sous la forme d'un mot ayant un nombre de bits approprié. Si une clé correcte est appliquée sur l'entrée 41, le module 4 connecte la sortie 35 d'une cellule de mémorisation sur la deuxième entrée 312 du multiplexeur 31 d'une autre cellule de mémorisation, selon un ordre déterminé. Le module 4 connecte l'entrée 45 sur l'entrée 312 du multiplexeur 32 de la première cellule de mémorisation du registre à décalage de test. Le module 4 connecte la sortie de la dernière cellule de mémorisation du registre à décalage de test à la sortie 46. Ainsi, lorsque les plots 33 reçoivent un signal scan-enable, le registre à décalage de test est formé comme illustré à la figure 3. et des données peuvent être inscrites ou lues par l'entrée 45 et la sortie 46.

Si aucune clé d'identification n'est appliquée sur l'entrée 41 ou si une clé d'identification erronée est appliquée, le module 4 connecte les entrées 312 de sorte que l'application du signal scan_enable sur le plot 33 génère un circuit de diversion 23 comme illustré à la figure 4. On prévoit que les connexions de ce circuit de diversion soient fixées aléatoirement, par connexion de bascules, de portes logiques ou d'états logiques prédéfinis sur les entrées 312. On peut notamment prévoir que les connexions du circuit de diversion 23 soient modifiées à chaque cycle d'horloge du circuit électronique.

La figure 1 illustre de façon détaillée un mode de réalisation possible d'un module de connexion 4 selon l'invention. Le module 4 présente des multiplexeurs 5. La sortie 53 de chaque multiplexeur 5 est connectée à l'entrée 312 d'une cellule de mémorisation associée. Le multiplexeur présente une entrée 52 connectée à la sortie d'une autre cellule de mémorisation. Cette connexion est destinée à former le registre à décalage de test 22.

Le module 4 présente un multiplexeur 43 pour chaque multiplexeur 5. La sortie d'un multiplexeur 43 est connectée au plot de sélection 54 du multiplexeur 5 associé. Le multiplexeur 43 est prévu pour appliquer soit une adresse de test, soit une adresse de diversion sur le plot de sélection 54.

A cette fin, le module 4 présente un générateur d'adresses de test 44. Le générateur 44 est connecté à l'entrée 41 et reçoit donc les clés appliquées sur cette entrée. Le générateur 44 compare la clé reçue avec une clé d'identification qu'il mémorise. Lorsque la clé reçue est identique à la clé d'identification mémorisée, le générateur 44 fournit les adresses correspondant au circuit de test sur l'entrée 431 des multiplexeurs 43. Le générateur 44 présente en outre une sortie 441 connectée au plot de sélection 433 du multiplexeur 43. Le générateur 44 applique sur la sortie 441 un signal de validation lorsque la clé d'identification reçue est correcte.

Le module 4 présente un générateur aléatoire d'adresses 42. Le générateur 42 applique aléatoirement une adresse sur une entrée 432 d'un multiplexeur 43. Les adresses appliquées sur les différents plots 432 sont de préférence générées aléatoirement de façon dissociée.

Lorsqu'un signal de validation est appliqué par la sortie 441 sur le plot 433, le multiplexeur 43 reproduit en sortie l'adresse de test. Le multiplexeur 5 associé reproduit ainsi sur sa sortie 53 l'état de son entrée 52. En absence de signal de validation, le multiplexeur 43 reproduit en sortie l'adresse de diversion appliquée par le générateur aléatoire. Le multiplexeur 5 reproduit alors en sortie l'état de l'entrée 51 ou 52 désignée par l'adresse de diversion.

Le multiplexeur 5 peut ne présenter qu'une entrée 51 et une entrée 52. En effet, si on réalise un multiplexage aléatoire entre ces deux entrées pour chaque multiplexeur 5, on peut également former aléatoirement des circuits de diversion 23. Bien entendu, plus le nombre d'entrées 51 sera élevé, plus le nombre de circuits de diversion générés aléatoirement pourra être important. Le nombre de circuits de diversion générés croit également avec le nombre de cellules de mémorisation connectées au module 4.

La figure 5 illustre un exemple de réalisation d'un circuit de diversion. Le circuit illustré en traits discontinus connecte les entrées 51 des multiplexeurs 5 aux sorties de porte XOR. L'utilisation de portes XOR permet d'accroître le nombre de circuits de diversion possibles. On peut appliquer sur l'entrée d'une porte XOR la sortie d'une cellule de mémorisation, un état logique prédéfini ou tout autre signal susceptible de rendre le circuit de diversion aléatoire et non représentatif du circuit de test. Comme illustré à la figure 4, on peut prévoir que les circuits de diversion formés soient des registres à décalage dont la configuration change aléatoirement à intervalles réguliers.

Bien qu'on ait décrit auparavant un exemple dans lequel on peut modifier la connexion de chaque cellule de mémorisation du registre à décalage de test, on peut également envisager de simplifier le circuit électronique 1 en n'appliquant une connexion aléatoire que sur un nombre limité de cellules de mémorisation 3.

Suivant la configuration du circuit électronique 1, l'homme du métier choisira d'y inclure ou non un circuit de commande tel qu'un contrôleur TAP. On pourrait prévoir que le module de connexion 4 soit intégré dans un contrôleur TAP. Le contrôleur délivrera de façon connue en soi tout autre signal nécessaire à la lecture ou l'écriture dans le registre à décalage de test. Le circuit électronique peut également être exempt de contrôleur TAP et être commandé par un contrôleur TAP extérieur connecté à une interface d'entrée/sortie du circuit électronique.

Le circuit électronique 1 peut être intégré dans une carte à puce.

## Revendications

1. Circuit électronique (1), comprenant :
- un circuit logique (2) présentant une pluralité de cellules logiques ;
- des cellules de mémorisation (3) susceptibles de former un registre à décalage, susceptibles d'être connectées aux cellules logiques, et présentant des bornes de réception de signaux de commande respectifs propres à inscrire des données dans les cellules et à lire des données inscrites dans les cellules;
**caractérisé en ce qu'**il comprend en outre :
- un module de contrôle de connexion (4) présentant une entrée de réception (41) d'une clé d'identification, le module connectant les cellules de mémorisation selon un ordre déterminé pour former un registre à décalage de test (22) lorsque l'entrée de réception reçoit une clé d'identification valide et lorsque les cellules de mémorisation reçoivent un signal de commande de test en lecture ou écriture, et le module connectant les cellules de mémorisation pour former aléatoirement un circuit de diversion (23) lorsque l'entrée ne reçoit pas une clé d'identification valide et lorsque les cellules de mémorisation reçoivent un signal de commande de test en lecture ou écriture.

2. Circuit électronique (1) selon la revendication 1, **caractérisé en ce que** les cellules logiques et les cellules de mémorisation (3) sont connectées pour former un circuit fonctionnel (21) lorsque les cellules de mémorisation ne reçoivent pas de signal de commande de lecture ou d'écriture de test.

3. Circuit électronique (1) selon la revendication 2, **caractérisé en ce que** chaque cellule de mémorisation comprend :
- un multiplexeur (33) dont une première entrée (311) présente une connexion de formation du circuit fonctionnel (21) et dont une deuxième entrée (312) est connectée au module de contrôle (4) de façon à former sélectivement le registre à décalage de test (22) ou le circuit de diversion (23);
- une bascule D (32) dont l'entrée est connectée à la sortie du multiplexeur (31) et dont la sortie présente une connexion de formation du circuit fonctionnel et une connexion au module de contrôle.

4. Circuit électronique selon la revendication 3, **caractérisé en ce que** le module de contrôle (4) comprend :
- un générateur aléatoire d'adresses (42) ;
- un circuit de sélection (43) présentant :
- une première entrée (431) de réception d'une adresse de test ;
- une deuxième entrée (432) connectée au générateur aléatoire (42);
- une sortie reproduisant l'état de la première entrée lorsque la clé d'identification est valable et reproduisant sinon l'état de la deuxième entrée;
- des multiplexeurs (5), chacun associé à une cellule de mémorisation (3) et présentant:
- une entrée (52) de formation du registre à décalage de test ;
- au moins une entrée (51) de formation d'un circuit de diversion ;
- une sortie (53) connectée à la deuxième entrée du multiplexeur de la cellule de mémorisation associée ;
- une entrée d'adressage (54) connectée à la sortie du circuit de sélection.

5. Circuit électronique (1) selon la revendication 4, **caractérisé en ce que** le générateur aléatoire (42) d'adresses génère aléatoirement une adresse distincte pour chaque multiplexeur (5) associé à une cellule de mémorisation (3).

6. Circuit électronique selon la revendication 4 ou 5, **caractérisé en ce que** le module de contrôle (4) comprend des portes XOR (6) dont la sortie est connectée à une entrée de formation d'un circuit de diversion et dont les entrées sont connectées à des cellules mémoires ou des cellules logiques.

7. Circuit électronique selon l'une quelconque des revendications 4 à 6, **caractérisé en ce que** des entrées de formation d'un circuit de diversion sont connectées à un niveau logique prédéfini.

8. Circuit électronique selon l'une quelconque des revendications précédentes, **caractérisé en ce que** le circuit de diversion (23) est un registre à décalage formé des cellules de mémorisation connectées suivant un ordre aléatoire.

9. Circuit électronique selon l'une quelconque des revendications précédentes, **caractérisé en ce que** le module comprend une entrée (45) et une sortie (46) respectivement pour l'inscription et la lecture des données dans les cellules formant le registre à décalage de test.

10. Circuit électronique (1) selon la revendication 9, **caractérisé en ce qu'**il comprend un circuit de commande, tel qu'un contrôleur d'accès, relié par des conducteurs de commande respectifs aux cellules de mémorisation et délivrant en fonctionnement lesdits signaux de commande sur les conducteurs de commande, et appliquant les données à inscrire sur l'entrée du module et lisant les données sur la sortie du module.

11. Carte à puce, **caractérisée en ce qu'**elle comprend un circuit électronique selon l'une quelconque des revendications précédentes.

## Claims

1. Electronic circuit (1), including:
- a logic circuit (2) having a plurality of logic cells;
- storage cells (3) able to form a shift register, able to be connected to the logic cells, and having terminals for the reception of respective control signals conducive to entering data into the cells and reading data entered in the cells;
**characterised in that** it additionally includes:
- a connection control module (4) having an input (41) for the reception of an identification key, the module connecting the storage cells in a pre-set order so as to form a test shift register (22) when the receive input receives a valid identification key, and when the storage cells receive a test control signal in read or write mode, and the module connecting the storage cells so as to form randomly a diversion circuit (23) when the input does not receive a valid identification key and when the storage cells receive a test control signal in read or write mode.

2. Electronic circuit (1) according to claim 1, **characterised in that** the logic cells and the storage cells (3) are connected so as to form an operating circuit (21) when the storage cells do not receive a test read or write control signal.

3. Electronic circuit (1) according to claim 2, **characterised in that** each storage cell includes:
- a multiplexer (33) with its first input (311) having a connection for the formation of an operating circuit (21) and with its second input (312) connected to the control module (4) so as to form selectively the test shift register (22) or the diversion circuit (23);
- a D flip-flop (32) with its input connected to the output of the multiplexer (31) and with its output having a connection for the formation of the operating circuit and a connection to the control module.

4. Electronic circuit according to claim 3, **characterised in that** the control module (4) includes:
- a random address generator (42);
- a selection circuit (43) having:
- a first input (431) for the reception of a test address;
- a second input (432) connected to the random generator (42);
- an output reproducing the state of the first input when the identification key is valid and otherwise reproducing the state of the second input;
- multiplexers (5), each associated with a storage cell (3) and having:
- an input (52) for the formation of the test shift register;
- at least one input (51) for the formation of a diversion circuit;
- an output (53) connected to the second input of the multiplexer of the associated storage cell;
- an addressing input (54) connected to the selection circuit output.

5. Electronic circuit (1) according to claim 4, **characterised in that** the random address generator (42) randomly generates a distinct address for each multiplexer (5) associated with a storage cell (3).

6. Electronic circuit (1) according to claim 4 or 5, **characterised in that** the control module (4) includes XOR gates (6) the output of which is connected to a diversion circuit formation input and the inputs of which are connected to memory cells or logic cells.

7. Electronic circuit according to any one of claims 4 to 6, **characterised in that** inputs for the formation of a diversion circuit are connected at a pre-set logic level.

8. Electronic circuit according to any one of the previous claims, **characterised in that** the diversion circuit (23) is a shift register formed by the storage cells connected in random order.

9. Electronic circuit according to any one of the previous claims, **characterised in that** the module includes an input (45) and an output (46) for entering and reading data respectively in the cells forming the test shift register.

10. Electronic circuit (1) according to claim 9, **characterised in that** it includes a control circuit, such as an access controller, connected by respective control conductors to the storage cells and delivering in operation said control signals on the control conductors, and applying the data for entry to the module input and reading the data at the module output.

11. Smart card, **characterised in that** it includes an electronic circuit according to any one of the previous claims.

## Patentansprüche

1. Elektronische Schaltung (1), umfassend:
- einen logischen Schaltkreis (2), der mehrere Logikzellen aufweist;
- Speicherzellen (3), die ein Schieberegister bilden können, mit den Logikzellen verbunden werden können, und Empfangsanschlüsse für jeweilige Steuersignale aufweisen, die Daten in die Zellen schreiben und Daten, die in die Zellen geschrieben sind, lesen können;
**dadurch gekennzeichnet, daß** er außerdem umfaßt:
- ein Verbindungskontrollmodul (4), das einen Empfangseingang (41) eines Identifikationsschlüssels aufweist, wobei das Modul die Speicherzellen gemäß einer bestimmten Ordnung verbindet, um ein Testschieberegister (22) zu bilden, wenn der Empfangseingang einen gültigen Identifikationsschlüssel empfängt und wenn die Speicherzellen ein Teststeuersignal beim Lesen oder Schreiben empfangen, und wobei das Modul die Speicherzellen verbindet, um zufällig einen Umleitschaltkreis (23) zu bilden, wenn der Eingang keinen gültigen Identifikationsschlüssel empfängt und wenn die Speicherzellen ein Teststeuersignal beim Schreiben oder Lesen empfangen.

2. Elektronische Schaltung (1) nach Anspruch 1, **dadurch gekennzeichnet, daß** die Logikzellen und die Speicherzellen (3) verbunden sind, um einen Funktionsschaltkreis (21) zu bilden, wenn die Speicherzellen kein Testlesesteuersignal oder Testschreibsteuersignal empfangen.

3. Elektronische Schaltung (1) nach Anspruch 2, **dadurch gekennzeichnet, daß** jede Speicherzelle umfaßt:
- einen Multiplexer (33), dessen erster Eingang (311) eine Verbindung zum Bilden des Funktionsschaltkreises (21) und dessen zweiter Eingang (312) mit dem Kontrollmodul (4) verbunden ist, um selektiv das Testschieberegister (22) oder den Umleitschaltkreis (23) zu bilden;
- einen Daten-Flipflop (32), dessen Eingang mit dem Ausgang des Multiplexers (31) verbunden ist und dessen Ausgang eine Verbindung zur Bildung des Funktionsschaltkreis und eine Verbindung hin zu dem Kontrollmodul aufweist.

4. Elektronische Schaltung nach Anspruch 3, **dadurch gekennzeichnet, daß** das Kontrollmodul (4) umfaßt:
- einen Adressen-Zufallsgenerator (42);
- einen Auswahlschaltkreis (43) mit:
- einem ersten Eingang (431) zum Empfangen einer Testadresse;
- einem zweiten Eingang (432), der mit dem Zufallsgenerator (42) verbunden ist;
- einem Ausgang, der den Zustand des ersten Eingangs wiedergibt, wenn der Identifikationsschlüssel gültig ist und andernfalls den Zustand des zweiten Eingangs wiedergibt;
- Multiplexer (5), wobei jeder einer Speicherzelle zugeordnet ist und aufweist:
- einen Eingang (52) zur Bildung des Testschieberegisters;
- zumindest einen Eingang (51) zur Bildung eines Umleitschaltkreises;
- einen Ausgang (53), der mit dem zweiten Eingang des Multiplexers der zugeordneten Speicherzelle verbunden ist;
- einen Adressierungseingang (54), der mit dem Ausgang des Auswahlschaltkreises verbunden ist.

5. Elektronische Schaltung (1) nach Anspruch 4, **dadurch gekennzeichnet, daß** der Adressen-Zufallsgenerator (42) zufällig eine unterschiedliche Adresse für jeden Multiplexer (5), der einer Speicherzelle (3) zugeordnet ist, generiert.

6. Elektronische Schaltung nach Anspruch 4 oder 5, **dadurch gekennzeichnet, daß** das Kontrollmodul (4) XOR-Tore (6) umfaßt, deren Ausgang mit einem Eingang zur Bildung Logikzellen verbunden ist und deren Eingänge mit den Speicherzellen oder den Logikzellen verbunden sind.

7. Elektronische Schaltung (1) nach einem der Ansprüche 4 bis 6, **dadurch gekennzeichnet, daß** die Eingänge zur Bildung des Umleitschaltkreises mit einer vordefinierten Logikstufe verbunden sind.

8. Elektronische Schaltung (1) nach einem der vorangehenden Ansprüche, **dadurch gekennzeichnet, daß** der Umleitschaltkreis (23) ein Schieberegister ist, das durch Speicherzellen gebildet ist, die gemäß einer zufälligen Ordnung verbunden sind.

9. Elektronische Schaltung (1) nach einem der vorangehenden Ansprüche, **dadurch gekennzeichnet, daß** das Modul einen Eingang (45) und einen Ausgang (46) jeweils zum Schreiben und zum Lesen von Daten in die Zellen umfaßt, die das Testschieberegister bilden.

10. Elektronische Schaltung (1) nach Anspruch 9, **dadurch gekennzeichnet, daß** sie einen Steuerschaltkreis, wie einen Zugangscontroller, umfaßt, der über jeweilige Steuerleitungen mit den Speicherzellen verbunden ist und in Betrieb die bewegten Steuersignale an den Steuerleitungen bereitstellt und die Daten zum Schreiben am Eingang des Moduls und zum Lesen der Daten am Ausgang des Moduls anwendet.

11. Microchipkarte, **dadurch gekennzeichnet, daß** sie eine elektronische Schaltung nach einem der vorangehenden Ansprüche umfaßt.
